# EUROPEAN PATENT APPLICATION

(11) **EP 4 851 486 A1**
(43) Date of publication of application: **09.12.2026**
(21) Application number: 25747898.2
(22) Date of filing: 24.01.2025
(51) Int. Cl.: F16H 1/08, F16H 48/38, F16H 1/20

(54) **SPEED REDUCER ASSEMBLY, SPEED REDUCER DEVICE AND VEHICLE**

(30) Priority: 31.01.2024 CN 202410140016; 31.01.2024 CN 202420243440 U
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Rui, Hangzhou Bay New District, Ningbo, Zhejiang 315336 (CN); KONG, Qingbo, Hangzhou Bay New District, Ningbo, Zhejiang 315336 (CN); MA, Zhe, Hangzhou Bay New District, Ningbo, Zhejiang 315336 (CN); LIU, Yu, Hangzhou Bay New District, Ningbo, Zhejiang 315336 (CN); XIN, Ran, Hangzhou Bay New District, Ningbo, Zhejiang 315336 (CN); TANG, Huijian, Hangzhou Bay New District, Ningbo, Zhejiang 315336 (CN)
(74) Representative: Boult Wade Tennant LLP
(86) International application number: PCT/CN2025/075008
(87) International publication number: WO 2025/162330

(57) **Abstract**

A speed reducer assembly (100) is provided, including a speed reducer body (110) and a differential (120) which are connected to each other, where the speed reducer body at least includes a second-stage driven gear (111), and the differential includes a differential case (121) and a gear assembly located in the differential case, the differential case and the second-stage driven gear being connected by means of welding. Connecting the second-stage driven gear of the speed reducer body to the differential case by means of welding can reduce the use of bolts in the speed reducer assembly, reduce the total weight of the speed reducer assembly, reduce the load of a vehicle, and extend the vehicle's endurance. A speed reducer device (200) arranged in the speed reducer assembly is provided, where the speed reducer device includes a first driven gear (212) and an intermediate rotating shaft (220), the periphery of one end of the intermediate rotating shaft has external spline teeth (221), and the first driven gear has a spline hole cooperating with the external spline teeth; the first driven gear and the intermediate rotating shaft are connected through the cooperation of the external spline teeth and the spline hole; and the external spline teeth are helical teeth. The helical external spline teeth can increase a cooperation width with the internal spline teeth, thereby increasing the tightness of the cooperation between the external spline teeth and the internal spline teeth, and preventing abnormal sound caused by loose cooperation between the intermediate rotating shaft and the first driven gear. Further provided is a vehicle including the speed reducer assembly.

## Description

### CROSS-REFERENCE TO RELATED APPLICATIONS

This application claims the priority of the Chinese patent application filed with the China National Intellectual Property Administration on January 31, 2024, with the application number 202410140016.6 and entitled "Speed Reducer Assembly and Vehicle", the entire content of which is incorporated herein by reference. This application claims the priority of the Chinese patent application filed with the China National Intellectual Property Administration on January 31, 2024, with the application number 202420243440.9 and entitled "Speed Reducer Device and Vehicle", the entire content of which is incorporated herein by reference.

### TECHNICAL FIELD

The present invention relates to the technical field of differentials, and in particular, to a speed reducer assembly and a vehicle.

### BACKGROUND

With the continuous development of the social economy, automobiles, as the most commonly used means of transportation for people's travel, have become increasingly common in people's lives. Among them, new energy vehicles use motors as power sources, with low operating costs and no exhaust emissions, making them environmentally friendly. With the continuous enhancement of people's environmental awareness, new energy vehicles are increasingly favored by people.

New energy vehicles typically include a motor and a speed reducer assembly. The speed reducer assembly includes a speed reducer body and a differential. The motor is connected to the speed reducer body, the speed reducer body is connected to the differential, and the differential is further connected to a vehicle axle, so that a driving force of the motor can be transmitted to the vehicle axle sequentially through the speed reducer body and the differential to drive the vehicle axle. The speed reducer body includes a second-stage driven gear, and the differential includes a differential case and transmission gears located within the differential case. The differential case is connected to the second-stage driven gear in the speed reducer body, so as to achieve the connection between the speed reducer body and the differential. Currently, the differential case and the second-stage driven gear are typically connected by bolts.

However, in the aforementioned connection method, the bolt connection uses a large number of bolts, increasing the overall weight of the speed reducer assembly. Moreover, the bolts occupy a large amount of space, which is not conducive to the overall layout inside the speed reducer assembly.

### SUMMARY

In view of this, the present invention provides a speed reducer assembly and a vehicle, which can effectively reduce the total weight of the speed reducer assembly and improve the overall structural layout of the speed reducer assembly.

To achieve the above objective, the technical solutions of the embodiments of the present application are implemented as follows.

A first aspect of the present application provides a speed reducer assembly, including a speed reducer body and a differential connected to each other;
the speed reducer body at least includes a second-stage driven gear, and the differential includes a differential case and a gear assembly located within the differential case;
the differential case is connected to the second-stage driven gear by means of welding.

By connecting the second-stage driven gear in the speed reducer body to the differential case through welding, the use of bolts in the speed reducer assembly can be reduced, which effectively reduces the total weight of the speed reducer assembly, thereby effectively reducing the load on the vehicle and extending the vehicle's endurance. Moreover, the welded connection makes the connection area between the speed reducer body and the differential relatively flat and occupies less space, contributing to the improvement of the overall structural layout of the speed reducer assembly.

In a possible implementation, an installation hole is provided on the second-stage driven gear, and the differential case has a connecting shaft;
the connecting shaft is fitted into the installation hole, and a connecting weld seam between the differential case and the second-stage driven gear is located between an outer periphery of the connecting shaft and an inner wall of the installation hole, and the connecting weld seam surrounds the connecting shaft.

In a possible implementation, a gas storage groove is provided between the inner wall of the installation hole and the outer periphery of the connecting shaft, the gas storage groove surrounding the outer periphery of the connecting shaft;
the gas storage groove is in communication with the connecting weld seam and is also in communication with the outside, so that a gas generated by the connecting weld seam is discharged outward through the gas storage groove.

In a possible implementation, an exhaust groove is further provided on the differential case;
one end of the exhaust groove is in communication with the gas storage groove, and the other end of the exhaust groove is in communication with the outside;
the gas in the gas storage groove is discharged outward through the exhaust groove.

In a possible implementation, a first groove is provided on the inner wall of the installation hole, the first groove surrounding the inner wall of the installation hole;
a second groove is further provided on the outer periphery of the connecting shaft, the second groove being opposite to the first groove, and the first groove and the second groove together form the gas storage groove.

In a possible implementation, the connecting shaft includes a first end and a second end opposite to each other;
the installation hole includes a third end and a fourth end opposite to each other, the third end cooperating with the first end and the fourth end cooperating with the second end;
the connecting weld seam is located between the first end and the third end;
the second end and the fourth end are in interference fit with each other.

In a possible implementation, a first notch is provided on the inner wall of the first end of the installation hole, and the connecting weld seam is filled in the first notch.

In a possible implementation, a second notch is provided on an outer periphery of the third end of the connecting shaft, the second notch is aligned with the first notch, and the connecting weld seam is also filled in the second notch.

In a possible implementation, the fourth end of the installation hole further has a limit step, and an end surface of the second end of the connecting shaft abuts against the limit step.

A second aspect of the present application provides a vehicle, including a motor, a vehicle axle, and the speed reducer assembly according to any one of the above;
the motor is connected to the speed reducer body in the speed reducer assembly, and the vehicle axle is connected to the differential in the speed reducer assembly.

A first aspect of the present application provides a speed reducer device, applied in a vehicle, including a first transmission assembly, the first transmission assembly including a first driving gear and a first driven gear meshing with each other;
the first driving gear is configured to be connected to a drive motor of the vehicle, and the first driven gear is configured to be connected to a vehicle axle of the vehicle;
the device further includes an intermediate rotating shaft, one end of the intermediate rotating shaft is connected to the first driven gear, and the other end of the intermediate rotating shaft is connected to the vehicle axle;
an outer periphery of the end of the intermediate rotating shaft connected to the first driven gear has external spline teeth, the first driven gear has a spline hole cooperating with the external spline teeth, and the first driven gear and the intermediate rotating shaft are connected through the cooperation of the external spline teeth and the spline hole;
the external spline teeth are helical teeth, and internal spline teeth in the spline hole are straight teeth.

By making the external spline teeth on the intermediate shaft helical teeth, for the same tooth width, the helical external spline teeth can increase a cooperation width with the internal spline teeth, which enables an interference fit on tooth flanks between the external spline teeth and the internal spline teeth in a spline hole, effectively enhances the tightness of the cooperation between the external spline teeth and the internal spline teeth, improves the tightness of the cooperation between the intermediate rotating shaft and the first driven gear, effectively prevents abnormal sound caused by loose cooperation between the intermediate rotating shaft and the first driven gear, and contributes to the improvement of user experience.

In a possible implementation, a helix angle formed between the external spline teeth and the intermediate rotating shaft is 5' to 20'.

In a possible implementation, the helix angle is 8'.

In a possible implementation, the first driven gear is a helical gear, and a helical direction of the external spline teeth is the same as a helical direction of the first driven gear.

In a possible implementation, the device further includes a second transmission assembly, the second transmission assembly including a second driving gear and a second driven gear meshing with each other;
the second driving gear is coaxially connected to the first driven gear, and the second driven gear is connected to the vehicle axle.

In a possible implementation, the second driving gear and the intermediate rotating shaft are of an integral structure, and the second driving gear is coaxially connected to the first driven gear through the intermediate rotating shaft.

In a possible implementation, the device further includes a differential assembly, one end of the differential assembly is connected to the second driven gear, and the other end of the differential is connected to the vehicle axle.

In a possible implementation, the first driving gear is coaxially connected to a rotating shaft of the drive motor of the vehicle.

In a possible implementation, the speed reducer device is a two-stage speed reducer, the first transmission assembly forms a first-stage reduction, and the second transmission assembly forms a second-stage reduction.

A second aspect of the present application provides a vehicle, including a drive motor and the speed reducer device according to any one of the above;
the first driving gear in the speed reducer device is connected to a rotating shaft of the drive motor.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and those skilled in the art may still derive other drawings from these accompanying drawings without creative effort.
FIG. 1 is a schematic structural diagram of a speed reducer assembly provided by an embodiment of the present application.
FIG. 2 is a schematic structural diagram of a connection between a second-stage driven gear and a differential case provided by an embodiment of the present application.
FIG. 3 is a schematic structural diagram of a second-stage driven gear provided by an embodiment of the present application.
FIG. 4 is a schematic structural diagram of a differential case provided by an embodiment of the present application.
FIG. 5 is a cross-sectional view of an assembly of a second-stage driven gear and a differential case provided by an embodiment of the present application.
FIG. 6 is a cross-sectional view of a second-stage driven gear provided by an embodiment of the present application.
FIG. 7 is a cross-sectional view of a differential case provided by an embodiment of the present application.
FIG. 8 is a schematic structural diagram of a speed reducer provided by an embodiment of the present application.
FIG. 9 is a schematic structural diagram of an intermediate rotating shaft provided by an embodiment of the present application.
FIG. 10 is a schematic structural diagram of cooperation between an intermediate rotating shaft and a first driven gear provided by an embodiment of the present application.
FIG. 11 is a front view of an intermediate rotating shaft provided by an embodiment of the present application.
FIG. 12 is an enlarged view of area A in FIG. 4.
FIG. 13 is a schematic diagram of a helix angle provided by an embodiment of the present application.
FIG. 14 is a force analysis diagram of forces applied to a first driven gear provided by an embodiment of the present application.
FIG. 15 is a schematic diagram of a helical direction of external spline teeth provided by an embodiment of the present application.
FIG. 16 is a force analysis diagram of forces applied by external spline teeth to a first driven gear provided by an embodiment of the present application.

### Reference signs:

100-speed reducer assembly;
110-speed reducer body; 111-second-stage driven gear; 1111-installation hole;
11111-third end; 11112-fourth end; 1112-first groove;
1113-limit step; 1114-second notch;
120-differential; 121-differential case; 1211-connecting shaft;
12111-first end; 12112-second end; 1212-exhaust groove;
1213-second groove; 1214-first notch;
130-gas storage groove;
200-speed reducer device;
210-first transmission assembly; 211-first driving gear; 212-first driven gear;
220-intermediate rotating shaft; 221-external spline teeth;
230-second transmission assembly; 231-second driving gear; 232-second driven gear;
240-differential assembly.

### DESCRIPTION OF EMBODIMENTS

To make the objectives, technical solutions, and advantages of the embodiments of the present application clearer, the following further describes the present application in detail with reference to the accompanying drawings in the embodiments of the present application. The following embodiments are used to illustrate the present application but are not intended to limit the scope of the present application.

The embodiments of the present application provide a speed reducer assembly and a vehicle including the same. The vehicle may be a car, a bus, or a truck. For example, the vehicle may be any one of an electric vehicle/automobile (Electric Vehicle, EV for short), a pure electric vehicle (Pure Electric Vehicle/Battery Electric Vehicle, PEV/BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), and a new energy vehicle (New Energy Vehicle).

As described in the background above, currently, the differential case and the second-stage driven gear in the speed reducer body are typically connected by bolts. However, the bolt connection uses a large number of bolts, increasing the overall weight of the speed reducer assembly. Moreover, the bolts occupy a large amount of space, which is not conducive to the overall layout inside the speed reducer assembly. In addition, bolt connections have the risk of loosening, reducing the overall reliability and stability of the speed reducer assembly.

Based on the above problems, an embodiment of the present application provides a speed reducer assembly. By connecting the second-stage driven gear in the speed reducer body to the differential case through welding, the use of bolts in the speed reducer assembly can be reduced, which effectively reduces the total weight of the speed reducer assembly, thereby effectively reducing the load on the vehicle and extending the vehicle's endurance. Moreover, the welded connection makes the connection area between the speed reducer body and the differential relatively flat and occupies less space, contributing to the improvement of the overall structural layout of the speed reducer assembly.

Hereinafter, a speed reducer assembly provided by an embodiment of the present application is described in detail with reference to the accompanying drawings.

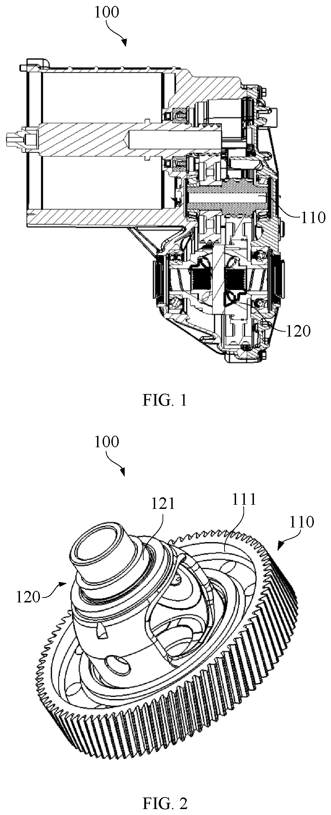

FIG. 1 is a schematic structural diagram of a speed reducer assembly provided by an embodiment of the present application. FIG. 2 is a schematic structural diagram of a connection between a second-stage driven gear and a differential case provided by an embodiment of the present application.

An embodiment of the present application provides a speed reducer assembly 100. As shown in FIG. 1 and FIG. 2, the speed reducer assembly 100 may include a speed reducer body 110 and a differential 120. The speed reducer body 110 may include a first-stage transmission gear and a second-stage transmission gear. The first-stage transmission gear may include a first-stage driving gear and a first-stage driven gear meshing with each other. The second-stage transmission gear may include a second-stage driving gear and a second-stage driven gear 111 meshing with each other.

The differential 120 may include a differential case 121 and transmission gears (not shown in the figures) located within the differential case 121. For example, the transmission gears may include side gears and planet gears. The first-stage driving gear may be connected to a motor, the second-stage driven gear 111 may be connected to the differential 120, and the differential 120 may be connected to a vehicle axle. For example, the vehicle axle may be connected to the side gears in the differential 120. A driving force output from the motor can be transmitted to the vehicle axle sequentially through the speed reducer and the differential 120, so as to rotate the vehicle axle, thereby enabling the vehicle to travel.

The differential case 121 and the second-stage driven gear 111 may be connected by means of welding. Compared with the bolt connection in the related art, the welded connection can reduce the use of bolts in the speed reducer assembly 100, which effectively reduces the total weight of the speed reducer assembly 100, thereby effectively reducing the load on the vehicle and extending the vehicle's endurance. Moreover, the welded connection makes the connection area between the speed reducer body 110 and the differential 120 relatively flat and occupies less space, contributing to the improvement of the overall structural layout of the speed reducer assembly 100.

Furthermore, the welded connection is firm and reliable, not prone to loosening, helping to further improve the reliability and stability of the connection between the speed reducer and the differential 120.

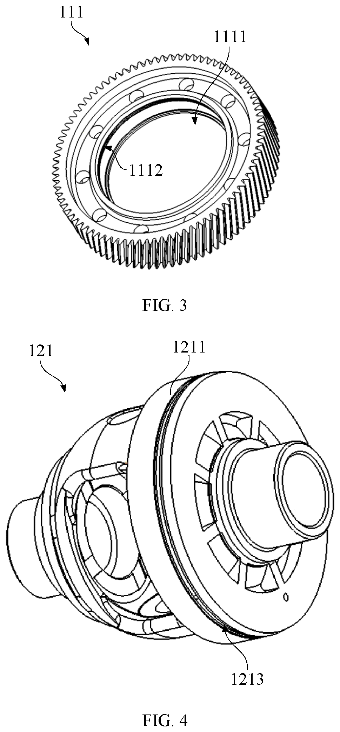

FIG. 3 is a schematic structural diagram of a second-stage driven gear provided by an embodiment of the present application. FIG. 4 is a schematic structural diagram of a differential case provided by an embodiment of the present application.

As shown in FIG. 3, an installation hole 1111 may be provided on the second-stage driven gear 111. As shown in FIG. 4, the differential case 121 may have a connecting shaft 1211. The connecting shaft 1211 may be fitted into the installation hole 1111. A connecting weld seam between the differential case 121 and the second-stage driven gear 111 may be located between an outer periphery of the connecting shaft 1211 and an inner wall of the installation hole 1111, and the connecting weld seam may surround the connecting shaft 1211.

For example, the connecting shaft 1211 may be inserted into the installation hole 1111, and then welding may be performed circumferentially around a contact area between the connecting shaft 1211 and the installation hole 1111 to produce an annular connecting weld seam, so that the connecting shaft 1211 and the installation hole 1111 can be connected through the annular connecting weld seam. As such, the firmness and reliability of the connection between the connecting shaft 1211 and the installation hole 1111 can be effectively improved, and the reliability and stability of the assembly between the speed reducer and the differential 120 can be enhanced.

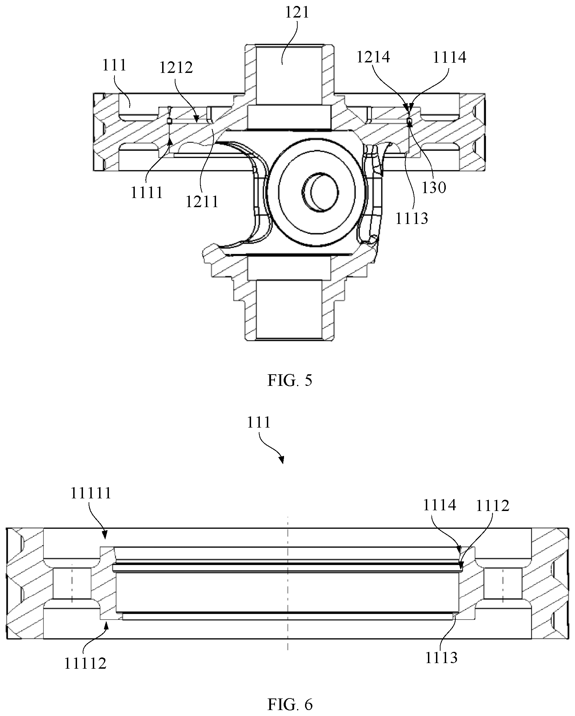

FIG. 5 is a cross-sectional view of an assembly of a second-stage driven gear and a differential case provided by an embodiment of the present application.

As shown in FIG. 5, a gas storage groove 130 may be provided between the inner wall of the installation hole 1111 and the outer periphery of the connecting shaft 1211. The gas storage groove 130 may surround the outer periphery of the connecting shaft 1211. The gas storage groove 130 may be in communication with the connecting weld seam and may also be in communication with the outside, so that a gas generated during the formation of the connecting weld seam can be discharged outward through the gas storage groove 130. As such, excessive gas generated at a connection area between the speed reducer and the differential 120, which affects the normal connection between the speed reducer and the differential 120, can be reduced or avoided, contributing to the improvement of the stability and reliability of the connection between the speed reducer and the differential 120.

Continuing to refer to FIG. 5, an exhaust groove 1212 may also be provided on the differential case 121. One end of the exhaust groove 1212 may be in communication with the gas storage groove 130, and the other end may be in communication with the outside. The gas in the gas storage groove 130 can be discharged outward through the exhaust groove 1212. For example, the number of exhaust grooves 1212 may be one, or, as shown in the figure, the number may be two, ensuring gas exhaust while reducing processing steps to lower production costs. Alternatively, in some examples, the number of exhaust grooves 1212 may be multiple to improve gas exhaust efficiency.

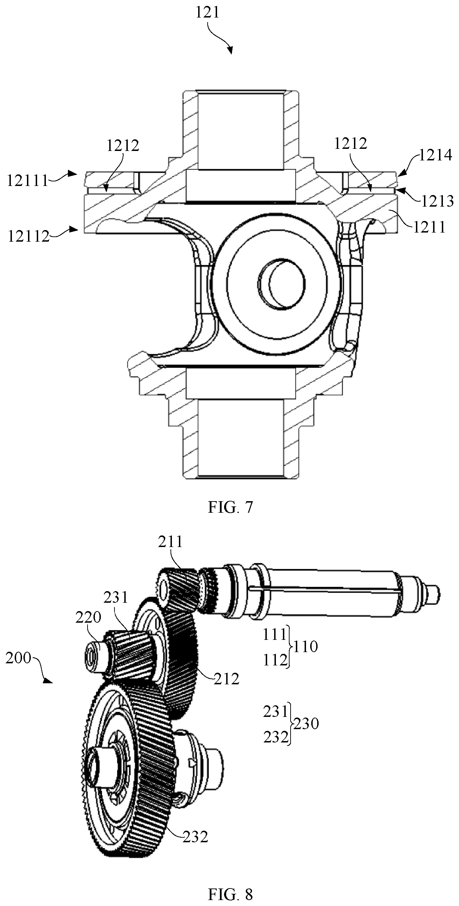

FIG. 6 is a cross-sectional view of a second-stage driven gear provided by an embodiment of the present application. FIG. 7 is a cross-sectional view of a differential case provided by an embodiment of the present application.

As shown in FIG. 6, a first groove 1112 may be provided on the inner wall of the installation hole 1111. The first groove 1112 may surround the inner wall of the installation hole 1111. The first groove 1112 may form the gas storage groove 130. For example, when the connecting shaft 1211 is installed into the installation hole 1111, an annular groove may be circumferentially formed between the first groove 1112 and an outer wall of the connecting shaft 1211, and this groove can form the gas storage groove 130, which can increase the capacity of the gas storage groove 130, so as to facilitate gas discharge.

As shown in FIG. 7, a second groove 1213 may also be provided on the outer periphery of the connecting shaft 1211. The second groove 1213 may be opposite to the first groove 1112. The first groove 1112 and the second groove 1213 may together form the gas storage groove 130 (refer to FIG. 5). For example, an opening of the first groove 1112 and an opening of the second groove 1213 may be arranged opposite to each other. After the connecting shaft 1211 is fitted into the installation hole 1111, the first groove 1112 and the second groove 1213 may be joined to form the gas storage groove 130, which can further increase a volume of the gas storage groove 130 and effectively improve the gas discharge effect.

Continuing with FIG. 6 and FIG. 7, the connecting shaft 1211 may include a first end 12111 and a second end 12112 opposite to each other. The installation hole 1111 may include a third end 11111 and a fourth end 11112 opposite to each other. The third end 11111 may cooperate with the first end 12111, and the fourth end 11112 may cooperate with the second end 12112. The connecting weld seam between the second driven gear and the differential case 121 may be located between the first end 12111 of the connecting shaft 1211 and the third end 11111 of the installation hole 1111, so that the first end 12111 of the connecting shaft 1211 and the third end 11111 of the installation hole 1111 can be connected through the connecting weld seam.

The second end 12112 of the connecting shaft 1211 and the fourth end 11112 of the installation hole 1111 may be connected through an interference fit. For example, the connecting shaft 1211 may first be fitted into the installation hole 1111 so that the second end 12112 of the connecting shaft 1211 and the fourth end 11112 of the installation hole 1111 are in interference fit; then, the first end 12111 of the connecting shaft 1211 and the third end 11111 of the installation hole 1111 may be welded.

As such, the firmness and reliability of the connection between the installation hole 1111 and the connecting shaft 1211 can be effectively improved, the disengagement of the connecting shaft 1211 from the installation hole 1111 can be effectively eliminated or prevented, thereby effectively improving the reliability and stability of the connection between the speed reducer and the differential 120.

Continuing with FIG. 6, a first notch 1214 may be provided on an inner wall of the first end 12111 of the installation hole 1111. The connecting weld seam may be located in the first notch 1214. For example, after the connecting shaft 1211 is fitted into the installation hole 1111, a groove may be formed between the first notch 1214 and the outer periphery of the connecting shaft 1211. An opening of the groove may face outward, allowing an operator to perform welding within the groove. Thus, a weld seam formed by welding can be located in the groove formed by the first notch 1214, preventing the connecting weld seam from protruding from the surfaces of the second-stage driven gear 111 and the differential case 121. This is beneficial for improving the flatness of the connection between the second-stage driven gear 111 and the differential case 121.

Moreover, this also helps to increase a size of the connecting weld seam, enlarge a contact area between the second-stage driven gear 111 as well as the differential case 121 and the connecting weld seam, thereby effectively improving the firmness and reliability of the connection between the second-stage driven gear 111 and the differential case 121.

Continuing with FIG. 7, a second notch 1114 may be provided on an outer periphery of the third end 11111 of the connecting shaft 1211. The second notch 1114 may be aligned with the first notch 1214, and the connecting weld seam may also be filled in the second notch 1114. For example, after the connecting shaft 1211 is fitted into the installation hole 1111, the first notch 1214 and the second notch 1114 may together form a groove, and the connecting weld seam may be located in the groove. By providing the second notch 1114 on the connecting shaft 1211, a size of the groove can be effectively increased. This effectively reduces or prevents overflow of the connecting weld seam, thereby effectively improving the flatness of the connection between the second-stage driven gear 111 and the differential case 121.

Furthermore, this can further increase the size of the connecting weld seam, enlarge the contact area between the second-stage driven gear 111 as well as the differential case 121 and the connecting weld seam, thereby effectively improving the firmness and reliability of the connection between the second-stage driven gear 111 and the differential case 121.

Continuing with FIG. 6, the fourth end 11112 of the installation hole 1111 may further have a limit step 1113. Referring to FIG. 5, an end surface of the second end 12112 of the connecting shaft 1211 may abut against the limit step 1113. For example, the connecting shaft 1211 may be inserted into the installation hole 1111 from the third end 11111 of the installation hole 1111, and the second end 12112 of the connecting shaft may abut against the limit step 1113 of the installation hole 1111. The limit step 1113 can position the connecting shaft 1211, preventing the connecting shaft 1211 from extending outside the installation hole 1111, which is beneficial for improving the fitting accuracy between the installation hole 1111 and the connecting shaft 1211, thereby effectively improving the assembly accuracy between the speed reducer and the differential 120.

The embodiments of the present application also provide a speed reducer device, which may be arranged within the speed reducer assembly.

In the related art, the speed reducer device includes a first-stage reduction gear assembly and a second-stage reduction gear assembly. A first-stage driven gear in the first-stage reduction gear assembly and a second-stage driving gear in the second-stage reduction gear assembly are connected through an intermediate rotating shaft, so as to transmit a rotational torque of the first-stage reduction gear assembly to the second-stage reduction gear assembly. The intermediate rotating shaft and the first-stage driven gear are usually connected through a spline. For example, the first-stage driven gear has an internal spline structure, and an outer periphery of the intermediate rotating shaft has an external spline structure. The first-stage driven gear and the intermediate rotating shaft are connected through the cooperation between the internal spline structure and the external spline structure.

However, in the aforementioned spline structures, the cooperation between the internal spline structure and the external spline structure is prone to loosening, thereby generating abnormal sound and affecting user experience.

In the related art, to increase the tightness of the cooperation between the internal spline structure and the external spline structure, an interference fit on tooth tops between the internal spline structure and the external spline structure is typically adopted. When a torque increases, a larger interference amount is required to ensure the assembly of the internal and external splines, which may cause greater damage to the tooth tops of the external spline and tooth roots of the internal spline, affecting the service life of the splines.

Based on the above problems, an embodiment of the present application also provides a speed reducer device. By making the external spline teeth on the intermediate shaft helical teeth, for the same tooth width, the helical external spline teeth can increase a cooperation width with the internal spline teeth, which enables an interference fit on tooth flanks between the external spline teeth and the internal spline teeth in a spline hole, effectively enhances the tightness of the cooperation between the external spline teeth and the internal spline teeth, improves the tightness of the cooperation between the intermediate rotating shaft and the first driven gear, effectively prevents abnormal sound caused by loose cooperation between the intermediate rotating shaft and the first driven gear, and contributes to the improvement of user experience.

Hereinafter, the speed reducer device provided by the embodiments of the present application is described in detail with reference to the accompanying drawings.

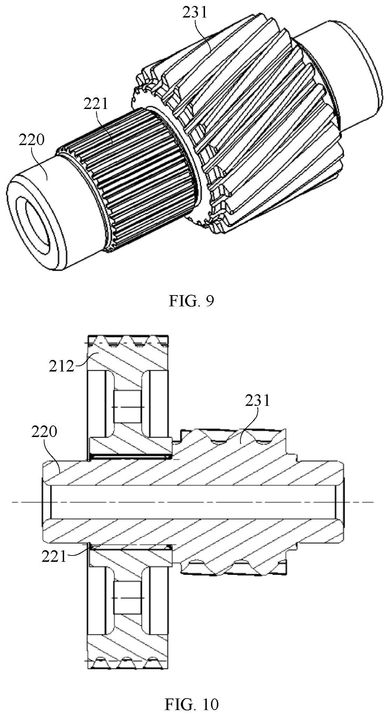

FIG. 8 is a schematic structural diagram of a speed reducer provided by an embodiment of the present application. FIG. 9 is a schematic structural diagram of an intermediate rotating shaft provided by an embodiment of the present application. FIG. 10 is a schematic structural diagram of cooperation between an intermediate rotating shaft and a first driven gear provided by an embodiment of the present application.

An embodiment of the present application provides a speed reducer device 200. The speed reducer device 200 can be understood as the speed reducer body 110 in the aforementioned speed reducer assembly 100. As shown in FIG. 8, the speed reducer device 200 may include a first transmission assembly 210. For example, the first transmission assembly may be the aforementioned first-stage transmission gear. The first transmission assembly 210 may include a first driving gear 211 and a first driven gear 212 meshing with each other. For example, the first driving gear 211 may be the aforementioned first-stage driving gear, and the first driven gear 212 may be the aforementioned first-stage driven gear. The first driving gear 211 may be connected to an output shaft of a drive motor of the vehicle, and the first driven gear 212 may be connected to a vehicle axle of the vehicle. The drive motor may drive the first driving gear 211 to rotate. During the rotation of the first driving gear 211, the first driven gear 212 may be driven to rotate. During the rotation of the first driven gear, a force can be transmitted to the vehicle axle to rotate the vehicle axle, thereby driving the vehicle to travel.

The speed reducer device 200 may further include an intermediate rotating shaft 220. One end of the intermediate rotating shaft 220 may be connected to the first driven gear 212, and the other end may be connected to the vehicle axle. The first driven gear 212 may transmit the force to the vehicle axle through the intermediate rotating shaft 220. As shown in FIG. 9 and FIG. 10, an outer periphery of an end of the intermediate rotating shaft 220 connected to the first driven gear 212 may have external spline teeth 221. The first driven gear 212 may have a spline hole cooperating with the external spline teeth 221. For example, internal spline teeth may be provided in the spline hole. The first driven gear 212 and the intermediate rotating shaft 220 may be connected through the cooperation of the external spline teeth 221 and the spline hole.

The external spline teeth 221 on the intermediate shaft may be helical teeth. For the same tooth width, the helical external spline teeth 221 can increase a cooperation width with the internal spline teeth, enabling an interference fit on tooth flanks between the external spline teeth 221 and the internal spline teeth in the spline hole, which effectively enhances the tightness of the cooperation between the external spline teeth 221 and the internal spline teeth, improves the tightness of the cooperation between the intermediate rotating shaft 220 and the first driven gear 212, effectively prevents abnormal sound caused by loose cooperation between the intermediate rotating shaft 220 and the first driven gear 212, and contributes to the improvement of user experience.

Moreover, compared with the tooth top interference method in the related art, the embodiments of the present application adopt the tooth flank interference fit, eliminating the need for tooth top interference fit between the internal and external splines, which can reduce or prevent damage to the tooth tops of the external spline teeth 221 and the tooth roots of the internal spline teeth and is conducive to the improvement of the service life of the splines. Furthermore, compared with tooth top interference, tooth flank interference requires a smaller axial pressing force during spline assembly, which can reduce assembly costs.

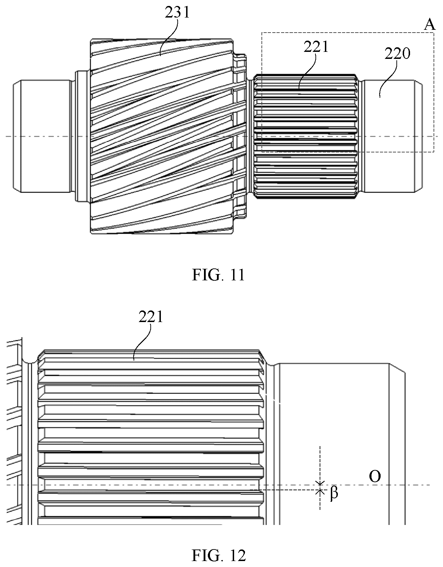

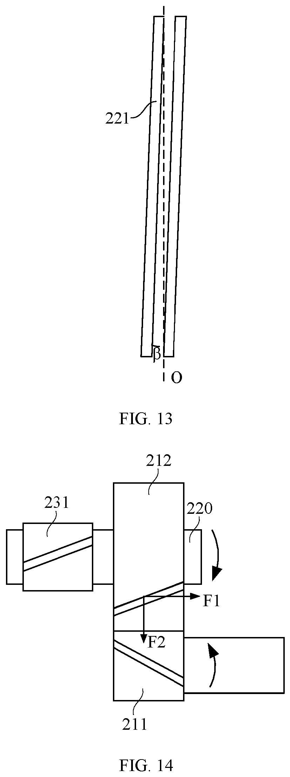

FIG. 11 is a front view of an intermediate rotating shaft provided by an embodiment of the present application. FIG. 12 is an enlarged view of area A in FIG. 11. FIG. 13 is a schematic diagram of a helix angle provided by an embodiment of the present application.

As shown in FIG. 11 and FIG. 12, in an embodiment of the present application, a helix angle formed between the external spline and the intermediate rotating shaft 220 may be β. A value range of β may be 5' to 20'. Referring to FIG. 6, the helix angle refers to an angle between a tangent line at a spiral line formed by the spline tooth along an axis of the intermediate rotating shaft 220 and a generatrix (i.e., the dashed line O in FIG. 13) of a cylindrical surface passing through the tangent point. For ease of understanding, the helix angle is exaggerated in FIG. 13 to explain the definition of the helix angle of the external spline teeth 221. By setting the helix angle within the above range, it can prevent loosening between the external spline teeth 221 and the spline hole due to an excessively small helix angle, and also prevent gaps from generating between the external spline and the internal spline due to an excessively large helix angle, allowing the external spline teeth 221 and the spline hole to cooperate more tightly, thereby effectively improving the firmness and tightness of the connection between the intermediate rotating shaft 220 and the first driven gear 212.

For example, the helix angle β may be 8'. This angle allows better cooperation between the external spline teeth 221 and the internal spline teeth, which further improves the tightness of the cooperation between the external spline teeth 221 and the internal spline teeth, effectively prevents abnormal sound between the intermediate shaft and the first driven gear 212, and improves the firmness and reliability of the connection between the intermediate rotating shaft 220 and the first driven gear 212.

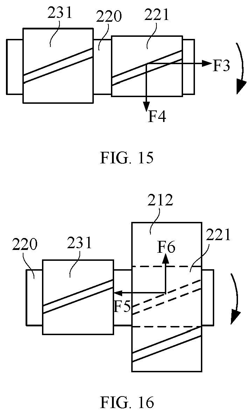

FIG. 14 is a force analysis diagram of forces applied by a first driving gear to a first driven gear provided by an embodiment of the present application. FIG. 15 is a force analysis diagram of forces applied by a first driven gear to external spline teeth provided by an embodiment of the present application. FIG. 16 is a force analysis diagram of forces applied by external spline teeth to a first driven gear provided by an embodiment of the present application.

As shown in FIG. 14 and FIG. 15, in an embodiment of the present application, the first driven gear 212 may be a helical gear, and a helical direction of the external spline teeth 221 on the intermediate rotating shaft 220 may be the same as a helical direction of the first driven gear 212. For example, when the helical direction of the first driven gear 212 is right-hand, the helical direction of the external spline teeth 221 on the intermediate rotating shaft 220 may also be right-hand. Conversely, when the helical direction of the first driven gear 212 is left-hand, the helical direction of the external spline teeth 221 on the intermediate rotating shaft 220 may be left-hand. For example, in the embodiment of the present application, the helical directions of both the first driven gear 212 and the external spline teeth 221 may be left-hand.

As such, a force applied to the first driven gear 212 can be balanced. For example, referring to FIG. 14, as shown by a rotation direction indicated by the arrow in FIG. 14, a force applied by the first driving gear 211 to the first driven gear 212 can be decomposed into two directions. One component force is along a circumferential direction of the first driven gear 212, which is the component force F2 in FIG. 14. This component force F2 can drive the first driven gear 212 to rotate. The other component force is the component force F1 in FIG. 14, which is along an axial direction of the first driven gear 212 and directed away from the second driving gear 231. This component force F1 will drive the first driven gear 212 to disengage from the intermediate rotating shaft 220, which affects the reliability of the connection between the first driven gear 212 and the intermediate rotating shaft 220.

As shown in FIG. 15, during the rotation of the first driven gear 212, it can exert a force on the external spline teeth 221 of the intermediate rotating shaft 220. Based on the helical direction of the external spline teeth 221, it can be derived that this force can be decomposed into an axial component force F3 and a circumferential component force F4. The component force F4 can drive the intermediate rotating shaft 220 to rotate. The direction of the component force F3 is the same as that of the component force F1.

Correspondingly, referring to FIG. 16, while the first driven gear 212 exerts a force on the intermediate rotating shaft 220, according to Newton's third law (relationship of action and reaction), the external spline teeth 221 on the intermediate rotating shaft 220 will also exert a reaction force on the first driven gear 212. This reaction force can be decomposed, as shown in FIG. 9, into an axial component force F5 and a circumferential component force F6. Moreover, a magnitude of the component force F5 is equal to that of the component force F3, but in an opposite direction. A magnitude of the component force F6 is equal to that of the component force F4, but in an opposite direction. That is, a direction of the axial component force F5 received on the first driven gear 212 is opposite to that of the component force F1. These two opposite forces can cancel each other out, reducing the force applied to the first driven gear 212 in the axial direction, thereby effectively reducing or preventing the first driven gear 212 from disengaging from the intermediate rotating shaft 220, and effectively improving the firmness and reliability of the connection between the first driven gear 212 and the intermediate rotating shaft 220.

Continuing with FIG. 8, the speed reducer device 200 may further include a second transmission assembly 230. The second transmission assembly 230 may include a second driving gear 231 and a second driven gear 232 meshing with each other. For example, the second transmission assembly 230 may be the aforementioned second-stage transmission gear, the second driving gear 231 may be the aforementioned second-stage driving gear, and the second driven gear 232 may be the aforementioned second-stage driven gear 111. The second driving gear 231 may be coaxially connected to the first driven gear 212, and the second driven gear 232 may be connected to the vehicle axle. During the rotation of the first driven gear 212, it can drive the second driving gear 231 to rotate at the same rotate speed. During the rotation of the second driving gear 231, it can drive the second driven gear 232 to rotate, causing the second driven gear 232 to drive the vehicle axle to rotate, thereby driving the vehicle to travel.

The speed reducer device 200 may be a two-stage speed reducer. The first transmission assembly may form a first-stage reduction, and the second transmission assembly 230 may form a second-stage reduction. Through the two-stage reduction, an input rotate speed of the drive motor can be reduced, allowing the vehicle axle to rotate at a set rotate speed.

For example, as shown in FIG. 9, in an embodiment of the present application, the second driving gear 231 and the intermediate shaft may be of an integral structure. The second driving gear 231 may be coaxially connected to the first driven gear 212 through the intermediate rotating shaft 220. For example, the second driving gear 231 may be located at an end of the intermediate rotating shaft 220 opposite to the external spline teeth 221. Thus, when the intermediate rotating shaft 220 is connected to the first driven gear 212 through spline cooperation, during the process in which the first driven gear 212 drives the intermediate rotating shaft 220 to rotate, the intermediate rotating shaft 220 can drive the second driving gear 231 to rotate, and a rotation speed of the second driving gear 231 is the same as that of the first driven gear 212.

Continuing with FIG. 8, one end of the differential assembly 240 may be connected to the second driven gear 232, and the other end may be connected to the vehicle axle. For example, the differential may include a differential case and a bevel gear assembly arranged within the differential case. The differential case may be connected to the second driven gear 232, and an output end of the bevel gear assembly in the differential case may be connected to the vehicle axle. During the rotation of the second driven gear 232, it can drive the differential case to rotate. During the rotation of the differential case, it can drive the bevel gear assembly to operate, causing the bevel gear assembly to drive the vehicle axle to rotate.

In the embodiments of the present application, the terms "first" and "second" are used for descriptive purposes only and should not be construed as indicating or implying relative importance or implicitly indicating the number of indicated technical features. Thus, features defined by "first" and "second" may explicitly or implicitly include one or more of such features. In the description of the embodiments of the present application, unless otherwise specified, "a plurality of" means two or more.

Furthermore, in the embodiments of the present application, directional terms such as "upper", "lower", "left", and "right" are defined relative to the orientations of components schematically placed in the accompanying drawings. It should be understood that these directional terms are relative concepts and are used for relative description and clarification. They may change accordingly as the orientations of components placed in the drawings change.

In the embodiments of the present application, unless explicitly specified and limited otherwise, the term "connection" should be understood broadly. For example, "connection" may be a fixed connection, a detachable connection, or an integral connection; it may be a direct connection or an indirect connection through an intermediate medium.

In the embodiments of the present application, the term "comprising", "including", or any other variation thereof is intended to cover a non-exclusive inclusion, such that a process, method, article, or device that includes a list of elements includes not only those elements but also other elements not explicitly listed, or elements inherent to such process, method, article, or device. Without further limitation, an element defined by the phrase "comprising one..." does not exclude the presence of additional identical elements in the process, method, article, or device that includes the element.

In the embodiments of the present application, terms such as "exemplary" or "for example" are used to mean serving as an example, illustration, or explanation. Any embodiment or design solution described as "exemplary" or "for example" in the embodiments of the present application should not be interpreted as being more preferred or advantageous than other embodiments or design solutions. Rather, the use of "exemplary" or "for example" is intended to present related concepts in a concrete manner.

The serial numbers of the embodiments of the present application are merely for description and do not represent the superiority or inferiority of the embodiments. The above are only preferred embodiments of the present application and are not intended to limit the patent scope of the present application. Any equivalent structural or equivalent process transformations made based on the content of the description and drawings of the present application, or direct or indirect applications in other related technical fields, shall be included in the patent protection scope of the present application.

## Claims

1. A speed reducer assembly, comprising a speed reducer body and a differential connected to each other;
wherein the speed reducer body at least comprises a second-stage driven gear, and the differential comprises a differential case and a gear assembly located within the differential case;
wherein the differential case is connected to the second-stage driven gear by means of welding.

2. The speed reducer assembly according to claim 1, wherein an installation hole is provided on the second-stage driven gear, and the differential case has a connecting shaft;
wherein the connecting shaft is fitted into the installation hole, and a connecting weld seam between the differential case and the second-stage driven gear is located between an outer periphery of the connecting shaft and an inner wall of the installation hole, and the connecting weld seam surrounds the connecting shaft.

3. The speed reducer assembly according to claim 2, wherein a gas storage groove is provided between the inner wall of the installation hole and the outer periphery of the connecting shaft, the gas storage groove surrounding the outer periphery of the connecting shaft;
wherein the gas storage groove is in communication with the connecting weld seam and is also in communication with the outside, so that a gas generated by the connecting weld seam is discharged outward through the gas storage groove.

4. The speed reducer assembly according to claim 3, wherein an exhaust groove is further provided on the differential case;
wherein one end of the exhaust groove is in communication with the gas storage groove, and the other end of the exhaust groove is in communication with the outside;
wherein the gas in the gas storage groove is discharged outward through the exhaust groove.

5. The speed reducer assembly according to claim 3 or claim 4, wherein a first groove is provided on the inner wall of the installation hole, the first groove surrounding the inner wall of the installation hole;
wherein a second groove is further provided on the outer periphery of the connecting shaft, the second groove being opposite to the first groove, and the first groove and the second groove together form the gas storage groove.

6. The speed reducer assembly according to any one of claims 2 to 4, wherein the connecting shaft comprises a first end and a second end opposite to each other;
wherein the installation hole comprises a third end and a fourth end opposite to each other, the third end cooperating with the first end and the fourth end cooperating with the second end;
wherein the connecting weld seam is located between the first end and the third end;
wherein the second end and the fourth end are in interference fit with each other.

7. The speed reducer assembly according to claim 6, wherein a first notch is provided on the inner wall of the first end of the installation hole, and the connecting weld seam is filled in the first notch.

8. The speed reducer assembly according to claim 7, wherein a second notch is provided on an outer periphery of the third end of the connecting shaft, the second notch is aligned with the first notch, and the connecting weld seam is also filled in the second notch.

9. The speed reducer assembly according to claim 6, wherein the fourth end of the installation hole further has a limit step, and an end surface of the second end of the connecting shaft abuts against the limit step.

10. A vehicle, comprising a motor, a vehicle axle, and the speed reducer assembly according to any one of claims 1 to 9;
wherein the motor is connected to the speed reducer body in the speed reducer assembly, and the vehicle axle is connected to the differential in the speed reducer assembly.

11. A speed reducer device, applied in a vehicle, comprising a first transmission assembly, the first transmission assembly comprising a first driving gear and a first driven gear meshing with each other;
wherein the first driving gear is configured to be connected to a drive motor of the vehicle, and the first driven gear is configured to be connected to a vehicle axle of the vehicle;
wherein the device further comprises an intermediate rotating shaft, one end of the intermediate rotating shaft is connected to the first driven gear, and the other end of the intermediate rotating shaft is connected to the vehicle axle;
wherein an outer periphery of the end of the intermediate rotating shaft connected to the first driven gear has external spline teeth, the first driven gear has a spline hole cooperating with the external spline teeth, and the first driven gear and the intermediate rotating shaft are connected through the cooperation of the external spline teeth and the spline hole;
wherein the external spline teeth are helical teeth, and internal spline teeth in the spline hole are straight teeth.

12. The speed reducer device according to claim 11, wherein a helix angle formed between the external spline teeth and the intermediate rotating shaft is 5' to 20'.

13. The speed reducer device according to claim 12, wherein the helix angle is 8'.

14. The speed reducer device according to any one of claims 11 to 13, wherein the first driven gear is a helical gear, and a helical direction of the external spline teeth is the same as a helical direction of the first driven gear.

15. The speed reducer device according to any one of claims 11 to 13, further comprising a second transmission assembly, the second transmission assembly comprising a second driving gear and a second driven gear meshing with each other;
wherein the second driving gear is coaxially connected to the first driven gear, and the second driven gear is connected to the vehicle axle.

16. The speed reducer device according to claim 15, wherein the second driving gear and the intermediate rotating shaft are of an integral structure, and the second driving gear is coaxially connected to the first driven gear through the intermediate rotating shaft.

17. The speed reducer device according to claim 16, further comprising a differential assembly, one end of the differential assembly is connected to the second driven gear, and the other end of the differential is connected to the vehicle axle.

18. The speed reducer device according to any one of claims 11 to 13, wherein the first driving gear is coaxially connected to a rotating shaft of the motor of the vehicle.

19. The speed reducer device according to claim 16 or 17, wherein the speed reducer device is a two-stage speed reducer, the first transmission assembly forms a first-stage reduction, and the second transmission assembly forms a second-stage reduction.

20. A vehicle, comprising a drive motor and the speed reducer device according to any one of claims 11 to 19;
wherein the first driving gear in the speed reducer device is connected to a rotating shaft of the drive motor.
